# EUROPEAN PATENT APPLICATION

(11) **EP 3 848 844 A1**
(43) Date of publication of application: **14.07.2021**
(21) Application number: 21150625.8
(22) Date of filing: 07.01.2021
(51) Int. Cl.: G06F 21/64, H04L 9/32, H04L 29/06

(54) **METHOD AND APPARATUS FOR DATA SYNCHRONIZATION OF MULTIPLE NODES, AND COMPUTER DEVICE**

(30) Priority: 07.01.2020 CN 202010015603; 16.01.2020 CN 202010048622
(71) Applicant: YottaChain Foundation Ltd., Singapore 139950 (SG)
(72) Inventor: WANG, Donglin, 139950 Singapore (SG)
(74) Representative: Hanna Moore + Curley

(57) **Abstract**

A method for data synchronization of multiple nodes includes: receiving, by a master node in at least one master node in the multiple nodes, a write operation submitted by an application program; packaging, by the master node, at least one data change log corresponding to the write operation into a block generated by the master node, and signing the block; broadcasting, by the master node, the block to other nodes in the multiple nodes after signing the block; reading, by at least one synchronous node in the multiple nodes, the at least one data change log in the block, and executing at least one data change operation corresponding to the at least one data change log in the block; and determining, by at least one node in the multiple nodes, an operation state of the block.

## Description

### TECHNICAL FIELD

The present application relates to the field of blockchain development technologies, in particular to a method and an apparatus for data synchronization of multiple nodes, and a computer device.

### BACKGROUND

In traditional database clusters or distributed storage systems, there is a contradiction between data reliability and synchronization performance of a write operation during data synchronization. The reasons for a contradiction between data reliability and synchronization performance of a write operation during data synchronization are that if the write operation is considered to be completed after an application program waits for multiple nodes to be synchronized, the synchronization performance of the write operation is too low, and if one node in the multiple nodes performs the data synchronization after being saved, and the node fails when the data has not been synchronized to other nodes, the data is lost and the data reliability is reduced. Therefore, if the data reliability is to be ensured, it needs to wait for the data synchronization between the multiple nodes to complete, resulting in poor data write performance. When each node database is in a same computer room, the contradiction is relatively not very prominent. A high-speed local area network may be used, which may not only obtain better synchronization performance of the write operation, but also ensure that the data is not lost. Moreover, multiple node databases in a same computer room are owned by a same owner, which may be isolated from the external network, and has relatively good physical protection, firewalls, and other security protection measures. Therefore, data synchronization solutions of the multiple nodes may ignore problems of node evil.

However, when each node in the multiple nodes is located in different regions far away from each other and connected to each other through a wide area network, the above problems are very prominent. Because the synchronization performance between the nodes is too slow, if each write operation needs to wait for enough nodes to complete the data synchronization before returning to the application program, the synchronization performance of the write operation is too low, and each node is distributed in different regions, the cost of adding security protection measures such as security personnel, physical protection, firewalls, and the like to each node is too high. Even different nodes may belong to different owners, and there is a risk that the nodes are doing evil proactively or doing evil after being controlled by a hacker. In this case, traditional data synchronization solutions of the multiple nodes are no longer applicable.

In the traditional way, the application program does not know a synchronization state of each node. When reading after writing is completed, since the write operation and a read operation are allocated to different nodes, and a node executing the read operation has not completed the synchronization of the write operation, a situation that the read data is the old data before writing may happen.

### SUMMARY

In view of this, embodiments of the present application are directed to providing a method and an apparatus for data synchronization of multiple nodes and a computer device. At least one data change log corresponding to a write operation submitted by an application program is packaged into a block by a master node, and the block is broadcast to other nodes in the multiple nodes, and then data is synchronized by a synchronous node in the multiple nodes, an operation state of the block is determined by at least one node in the multiple nodes. And finally, the operation state of the block is queried by the application program from the at least one node during a data synchronization process, and a state of the data synchronization is determined according to the operation state of the block, so that the application program realizes the tracking of the state of the data synchronization during the data synchronization process, the application program may balance the synchronization performance of the write operation and the data reliability by itself, and problems of the data inconsistency are solved. For example, the application program may continue to the next step without waiting for each write operation being confirmed during a series of write operations, and then confirm whether all the write operations are confirmed at the end (i.e., each write operation is synchronized to a sufficient number of nodes). If a write operation is unsuccessful due to a node failure, the write operation may be resubmitted until all the write operations are completely finished, which may take into account the synchronization performance of the write operation and the data reliability. In addition, the application program may also understand an execution state of the write operation, and know which node may read the data after the write operation is executed and when the write data may be read at all the synchronous nodes.

According to a first aspect of the embodiments of the present application, a method for data synchronization of multiple nodes is provided, including: receiving, by a master node in at least one master node in the multiple nodes, a write operation submitted by an application program; packaging, by the master node, at least one data change log corresponding to the write operation into a block generated by the master node, and signing the block; broadcasting, by the master node, the block to other nodes in the multiple nodes after signing the block; reading, by at least one synchronous node in the multiple nodes, the at least one data change log in the block, and executing at least one data change operation corresponding to the at least one data change log in the block, so as to complete the data synchronization; and determining, by at least one node in the multiple nodes, an operation state of the block, so that the application program determines a state of the data synchronization according to the operation state of the block.

In an embodiment of the present application, the method further includes: broadcasting, by each node of the multiple nodes except the master node, a confirmation reception message to other nodes in the multiple nodes after receiving the block. The confirmation reception message includes a confirmation reception signature of the node in the multiple nodes except the master node.

In an embodiment of the present application, the determining, by at least one node in the multiple nodes, an operation state of the block includes: when a node in the at least one node satisfies a second preset condition, determining, by the node, the block as a confirmed block, and determining a height of a highest confirmed block as a confirmed block height.

In an embodiment of the present application, the second preset condition includes: receiving, by the node in the at least one node, the confirmation reception message broadcast by a preset number of nodes in the multiple nodes except the master node; and determining, by the node in the at least one node, all blocks generated before the block as the confirmed block.

In an embodiment of the present application, the method further includes: broadcasting, by a synchronous node in the at least one synchronous node, a confirmation execution message to other nodes in the multiple nodes after executing the at least one data change operation in the block. The confirmation execution message includes a confirmation execution signature of the synchronous node.

In an embodiment of the present application, the determining, by at least one node in the multiple nodes, an operation state of the block includes: when a node in the at least one node satisfies a first preset condition, determining, by the node, the block as an irreversible block and determining a height of a highest irreversible block as an irreversible block height.

In an embodiment of the present application, the first preset condition includes: receiving, by the node in the at least one node, the confirmation execution message broadcast by all synchronous nodes in the multiple nodes; and determining, by the node in the at least one node, all blocks generated before the block as the irreversible block.

In an embodiment of the present application, the method further includes: sending, by the master node, a height of a block containing the at least one data change log corresponding to the write operation to the application program, so that the application program determines the state of the data synchronization according to the height of the block containing the at least one data change log corresponding to the write operation and the operation state of the block.

In an embodiment of the present application, the method further includes: broadcasting, by the master node, at least one verification data corresponding to the at least one data change log in the block while broadcasting the block.

In an embodiment of the present application, the reading, by at least one synchronous node in the multiple nodes, the at least one data change log in the block, and executing at least one data change operation corresponding to the at least one data change log in the block includes: verifying, by the at least one synchronous node, the at least one verification data; and when the at least one verification data is verified, reading, by the at least one synchronous node, the at least one data change log in the block, and executing the at least one data change operation corresponding to the at least one data change log in the block.

In an embodiment of the present application, the method further includes: verifying whether data of the at least one synchronous node after executing the at least one data change operation in the block is consistent; and when the data of the at least one synchronous node after executing the at least one data change operation in the block is inconsistent, removing nodes with inconsistent data according to a preset strategy.

In an embodiment of the present application, the method further includes: forking a blockchain where the multiple nodes are located into at least two sub-chains, so that the master node packages a data change log corresponding to the write operation into a block of a corresponding sub-chain by category.

According to a second aspect of the embodiments of the present application, a method for data synchronization of multiple nodes is provided, including: submitting a write operation to a master node in at least one master node in the multiple nodes, so that the master node packages at least one data change log corresponding to the write operation into a block generated by the master node; querying an operation state of the block from at least one node in the multiple nodes; and determining a state of the data synchronization according to the operation state of the block.

In an embodiment of the present application, the method further includes: receiving a height of a block containing the at least one data change log corresponding to the write operation from the master node.

In an embodiment of the present application, the determining a state of the data synchronization according to the operation state of the block includes: comparing a confirmed block height with the height of the block containing the at least one data change log corresponding to the write operation; and when the height of the block containing the at least one data change log corresponding to the write operation is less than or equal to the confirmed block height, determining that the write operation is successfully written, and/or comparing an irreversible block height with the height of the block containing the at least one data change log corresponding to the write operation; and when the height of the block containing the at least one data change log corresponding to the write operation is less than or equal to the irreversible block height, being able to query a data state after executing the write operation from at least one synchronous node in the multiple nodes.

According to a third aspect of the embodiments of the present application, an apparatus for data synchronization of multiple nodes is provided, including: a master node operation receiving module, configured to receive, by a master node in at least one master node in the multiple nodes, a write operation submitted by an application program; a master node operation module, configured to package, by the master node, at least one data change log corresponding to the write operation into a block generated by the master node, and sign the block; a block broadcasting module, configured to broadcast, by the master node, the block to other nodes in the multiple nodes after signing the block; a data synchronization module, configured to read, by at least one synchronous node in the multiple nodes, the at least one data change log in the block, and execute at least one data change operation corresponding to the at least one data change log in the block, so as to complete the data synchronization; and a block operation state determination module, configured to determine, by at least one node in the multiple nodes, an operation state of the block, so that the application program determines a state of the data synchronization according to the operation state of the block.

According to a forth aspect of the embodiments of the present application, an apparatus for data synchronization of multiple nodes is provided, including: an operation submission module, configured to submit, by an application program, a write operation to a master node in at least one master node in the multiple nodes, so that the master node packages at least one data change log corresponding to the write operation into a block generated by the master node; a state query module, configured to query, by the application program, an operation state of the block from at least one node in the multiple nodes; and a data synchronization state determination module, configured to determine, by the application program, a state of the data synchronization according to the operation state of the block.

According to a fifth aspect of the embodiments of the present application, a computer device is provided, including: a memory, a processor and a computer program stored on the memory and executed by the processor. The processor performs a method for data synchronization of multiple nodes as described above when executing the computer program.

In the method for the data synchronization of the multiple nodes provided by the embodiments of the present application, the at least one data change log corresponding to the write operation submitted by the application program is packaged into the block by the master node, and the block is broadcast to the other nodes in the multiple nodes. And then the data is synchronized by the synchronous node in the multiple nodes, the operation state of the block is determined by the at least one node in the multiple nodes. And finally, the operation state of the block is queried by the application program from the at least one node during a data synchronization process, and the state of the data synchronization is determined according to the operation state of the block, thereby realizing the tracking of the state of the data synchronization by the application program during the data synchronization process. For example, when the write operation of the application program fails, the write operation may be rewritten in time; and/or, when data synchronization progress of each node is different during the data synchronization process, the synchronization progress of each node is generally known.

### BRIEF DESCRIPTION OF DRAWINGS

FIG. 1 is a schematic flowchart of a method for data synchronization of multiple nodes according to an embodiment of the present application.
FIG. 2 is a schematic flowchart of a method for data synchronization of multiple nodes according to another embodiment of the present application.
FIG. 3 is a block diagram of an apparatus for data synchronization of multiple nodes according to an embodiment of the present application.
FIG. 4 is a block diagram of an apparatus for data synchronization of multiple nodes according to another embodiment of the present application.
FIG. 5 is a block diagram of an apparatus for data synchronization of multiple nodes according to still another embodiment of the present application.

### DETAILED DESCRIPTION OF THE EMBODIMENTS

A clear and complete description of technical solutions of the embodiments of the present application will be given below, in combination with the accompanying drawings in the embodiments of the present application. Apparently, the embodiments described below are a part, but not all, of the embodiments of the present application. All of other embodiments, obtained by those skilled in the art based on the embodiments of the present application without any inventive efforts, fall into the protection scope of the present application.

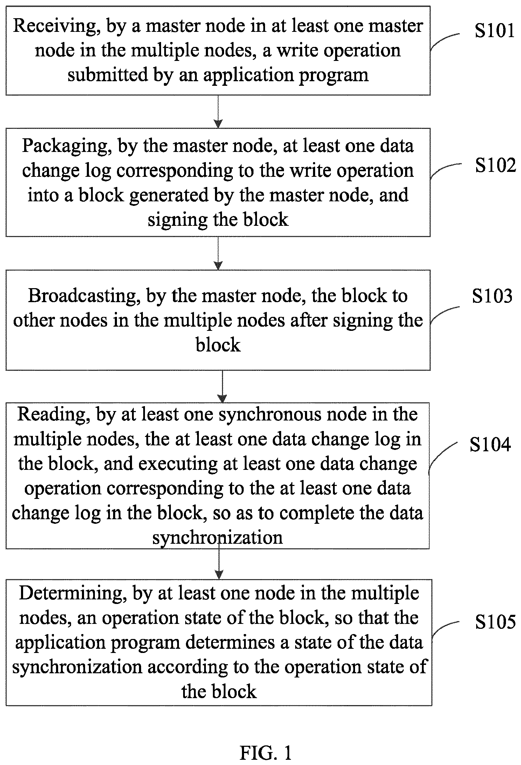

FIG. 1 is a schematic flowchart of a method for data synchronization of multiple nodes according to an embodiment of the present application. As shown in FIG. 1, the method includes the following contents.

S101: receiving, by a master node in at least one master node in the multiple nodes, a write operation submitted by an application program.

It should be understood that the multiple nodes may be nodes in a blockchain, a generalized blockchain such as a DAG (Directed Acyclic Graph), a public chain, an alliance chain, or a private chain, which is not limited in the embodiments of the present application. In a data synchronization process, the number of write operations may be many, and the specific number of write operations is not limited in the embodiments of the present application. In a same block outputting cycle, the write operations may be submitted to a same master node by multiple application programs, and multiple write operations may be submitted to the master node by each application program in a same block outputting cycle. One write operation may correspond to one or more data change operations, which is not limited in the embodiments of the present application.

Specifically, when the application program performs the write operation (including, but not limited to, writing a database), the application program may submit the write operation to the master node, so that a database (or other data storage form) of the master node generates data changes, and generates a data change log corresponding to the write operation accordingly.

In an embodiment of the present application, an operation recorded in the data change log may be adding data, deleting existing data, changing existing data, or other operations to change data.

S102: packaging, by the master node, at least one data change log corresponding to the write operation into a block generated by the master node, and signing the block.

It should be understood that the multiple nodes may include the at least one master node. When the number of at least one master node is multiple, in each block outputting cycle, the multiple master nodes further include a master node that generates the block, and other master nodes except the master node that generates the block. I.e., in different block outputting cycles, the block is generated by different master nodes, and different master nodes generate the block at different times. When the multiple nodes are in the DAG, the multiple master nodes may generate the block at the same time in each block outputting cycle. When the number of the at least one master node is one, the block is generated by the one master node no matter in which block outputting cycle.

Specifically, the master node packages the data change log corresponding to the write operation into the block, and signs the block to confirm the identity of the block. It should be noted that the block is truly generated only after the block has gone through a signature step of the master node with the right to output the block, i.e., the block after signed may be added to the blockchain to inform other nodes in the blockchain that the block is irreplaceable and cannot be tampered with.

In an embodiment, the signature that the master node puts to the block is to encrypt a digital digest of the block with a private key of the master node, and is a valid proof of the authenticity of information broadcast by a broadcaster of the block information.

It should be noted that the specific storage form of the data is not limited in the embodiments of the present application, which may be the data in the database of the master node, the data in a file of the master node, the data in a memory, or the data in a non-file system. The number of data change logs packaged into the block is not limited in the embodiments of the present application. Preferably, the data change logs packaged into the block are all data change logs corresponding to the write operation, so that an entire data synchronization process may be completed to avoid a situation where certain data cannot be synchronized. The specific number of at least one master node is not limited in the embodiments of the present application.

S103: broadcasting, by the master node, the block to other nodes in the multiple nodes after signing the block.

It should be understood that the multiple nodes may also include an asynchronous node and a synchronous node. The role of the synchronous node is to execute a data change operation after receiving the block broadcast by the master node, thereby achieving the data synchronization. The asynchronous node does not execute the data change operation, but receives and saves the block broadcast by the master node to save records of all data change operations, so as to ensure that all the data change operations will not be lost. In extreme cases, even if all synchronous nodes fail, all block information saved by the asynchronous node may be used to re-execute all the data change operations to recover the state of the data. The multiple nodes may also include a slave node, i.e., other nodes that are not the master node. There is no necessary relationship between the master node and the synchronous node. The master node may be the synchronous node or the asynchronous node, and the slave node may be the synchronous node or the asynchronous node, which are not limited in the embodiments of the present application.

In an embodiment of the present application, all nodes except the master node that generates the block may receive the block broadcast by the master node that generates the block, i.e., the block may be broadcast to the synchronous node or to the asynchronous node. However, it should be noted that the type of the node to which the block is broadcast is not limited in the embodiments of the present application.

Specifically, when the number of at least one master node is one, after signed by the master node, the block may be broadcast to at least one slave node. When the number of at least one master node is multiple, after signed by the master node that generates the block, the block may be broadcast to the other master nodes, or broadcast to the other master nodes and the at least one slave node. It should be noted that the type of synchronous node to which the block generated by the master node is broadcast is not limited in the embodiments of the present application, as long as the synchronous node receiving the block may complete the synchronization of data that cannot be tampered with. The specific number of at least one synchronous node is not limited in the embodiments of the present application.

The manner of broadcasting the block is not limited in the embodiments of the present application. Broadcasting the block by the master node may be regarded as a process of broadcasting information by the master node, i.e., the broadcast information may be sent directly to the other nodes by a sender; or the broadcast information may be monitored by the other nodes after the broadcast information is sent by the sender; or the broadcast information may be sent to all neighboring nodes of the sender, and after receiving the broadcast information, the neighboring nodes of the sender forward the broadcast information to all their neighboring nodes until the broadcast information is broadcast to all nodes. Broadcasting the information may also be other broadcast manners.

S104: reading, by least one synchronous node in the multiple nodes, the at least one data change log in the block, and executing at least one data change operation corresponding to the at least one data change log in the block, so as to complete the data synchronization.

Specifically, after receiving the block, any one synchronous node in the at least one synchronous node may read the at least one data change log packaged into the block, and execute the at least one data change operation corresponding to the at least one data change log in the block to complete the data synchronization.

It should be noted that the synchronous node may read immediately the at least one data change log packaged into the block after receiving the block, but the timing when the synchronous node reads the at least one data change log in the block is not specifically limited in the embodiments of the present application. The synchronous node may read the at least one data change log in the block only after more than a preset number of synchronous nodes and asynchronous nodes have received the block. The synchronous node may also read the at least one data change log in the block after a preset time, or after executing all data change operations included in a previous block, or at other times.

S105: determining, by at least one node in the multiple nodes, an operation state of the block, so that the application program determines a state of the data synchronization according to the operation state of the block.

It should be understood that the at least one node in the multiple nodes may determine the operation state of the block. The operation state of the block may refer to a reception state of the block (i.e. a confirmed block), an execution state of the block (i.e. an irreversible block), or the like. The operation state of the block is not specifically limited in the embodiments of the present application.

It should be noted that the number of nodes that may determine the operation state of the block is not specifically limited in the embodiments of the present application, and the type of nodes that may determine the operation state of the block is not specifically limited in the embodiments of the present application, which may be any type of node in the multiple nodes.

In another embodiment of the present application, the method further includes: broadcasting, by each node in the multiple nodes except the master node, a confirmation reception message to other nodes in the multiple nodes after receiving the block. The confirmation reception message includes a confirmation reception signature of the node in the multiple nodes except the master node.

It should be understood that the confirmation reception message includes the confirmation reception signature that the node puts to the block, so as to indicate that the node has received the block, and the confirmation reception signature is recorded in the confirmation reception message. The node broadcasts the confirmation reception message to all other nodes to inform all other nodes that the block broadcast by the master node has been received by itself. The confirmation reception signature is to inform all other nodes that the confirmation reception message is trustworthy and cannot be tampered with.

In an embodiment of the present application, the confirmation reception signature is a result of the node encrypting a digital digest of a signed block with its own private key.

In an embodiment of the present application, since the block is generated by the master node, the master node that generates the block does not need to broadcast the confirmation reception message, i.e., a node that broadcasts the confirmation reception message in the embodiment of the present application is any one node except the master node that generates the block. After receiving the block, each node needs to broadcast the confirmation reception message to inform the other nodes that the block has been received by itself, and therefore, in fact, each node except the master node that generates the block is a broadcaster of the confirmation reception message, and all nodes are receivers.

The manner of broadcasting the confirmation reception message is not limited in the embodiments of the present application. The confirmation reception message may be sent directly to the other nodes by a sender; or the confirmation reception message may be monitored by the other nodes after the confirmation reception message is sent by the sender; or the confirmation reception message may be sent to all neighboring nodes of the sender, and after receiving the confirmation reception message, the neighboring nodes of the sender forward the confirmation reception message to all their neighboring nodes until the confirmation reception message is broadcast to all nodes. Broadcasting the confirmation reception message may also be other broadcast manners.

In another embodiment of the present application, the determining, by at least one node in the multiple nodes, an operation state of the block includes: when a node in the at least one node satisfies a second preset condition, determining, by the node, the block as a confirmed block, and determining a height of a highest confirmed block as a confirmed block height.

It should be noted that each node may determine the block as the confirmed block, as long as the node satisfies the second preset condition. The number of nodes that may determine the confirmed block is not specifically limited in the embodiments of the present application.

Specifically, when the block is determined as the confirmed block, the confirmed block height may also be determined as the height of the highest confirmed block.

In an embodiment of the present application, the data change operation in the block may be lost due to the failure of the master node that generates the block. However, when enough nodes have received the block, i.e., when the block is determined as the confirmed block, because enough nodes have recorded the data change operation, even if the master node that generates the block fails, the data change operation in the confirmed block will not be lost. In this case, the data change operation is actually completed (i.e., the data change operation takes effect).

In an embodiment of the present application, it does not mean that the data change operation is valid after the data change operation takes effect. Only after verification data corresponding to the data change operation after taking effect has passed the verification, the data change operation after taking effect may be executed, and at this time, it means that the data change operation after taking effect is valid.

In another embodiment of the present application, the second preset condition includes: receiving, by the node in the at least one node, the confirmation reception message broadcast by a preset number of nodes in the multiple nodes except the master node; and determining, by the node in the at least one node, all blocks generated before the block as the confirmed block.

It should be understood that the second preset condition includes two conditions, a first condition is that the node has received the confirmation reception message broadcast separately by the preset number of nodes in the multiple nodes except the master node, which indicates that the preset number of nodes have received the block. It should be noted that the node may refer to any one node in the multiple nodes. A second condition is that all blocks generated before the block are determined as the confirmed block by the node, which indicates that all blocks generated before the block and the block are confirmed continuously as the confirmed block. A height of the confirmed block with the highest height is called the confirmed block height. All data change operations in all blocks whose height do not exceed the confirmed block height have taken effect.

It should be noted that the preset number may be a fixed number or a dynamic number calculated according to a preset rule. Regardless of which kind of number, the preset number may be related to the number of current online nodes. For example, the preset number of synchronous nodes may be two-thirds or three-thirds of all the online nodes. It should be noted that the number of the preset number of nodes is not limited in the embodiments of the present application, as long as the preset number of nodes is enough, and the purpose is to ensure that enough nodes have recorded all data change operations.

In another embodiment of the present application, the method further includes: broadcasting, by a synchronous node in the at least one synchronous node, a confirmation execution message to other nodes in the multiple nodes after executing the at least one data change operation in the block. The confirmation execution message includes a confirmation execution signature of the synchronous node.

It should be understood that the confirmation execution message includes the confirmation execution signature that the synchronous node puts to the block, so as to indicate that the synchronous node has completed all data change operations in the block. The confirmation execution signature is recorded in the confirmation execution message. The synchronous node broadcasts the confirmation execution message to all other nodes to inform all other nodes that all the data change operations in the block have completed by itself. The confirmation execution signature is to inform all other nodes that the confirmation execution message is trustworthy and cannot be tampered with.

It should be noted that the master-slave type of the synchronous node that broadcasts the confirmation execution message is not limited in the embodiments of the present application, which may be any synchronous node including the master node that generates the block (such as any master node or slave node). As long as the synchronous node has executed the data change operation in the block, the synchronous node may broadcast the confirmation execution message. Since after executing the data change operation in the block, each synchronous node needs to broadcast the confirmation execution message to inform other nodes that all data change operations in the block have completed by itself, in fact, each synchronous node is a broadcaster and a receiver of the confirmation execution message.

The manner of broadcasting the confirmation execution message is not limited in the embodiments of the present application. The confirmation execution message may be sent directly to other nodes by a sender, or the confirmation execution message may be monitored by other nodes after the confirmation execution message is sent by the sender, or the confirmation execution message is sent to all neighboring nodes of the sender, and after receiving the confirmation execution message, the neighboring nodes of the sender forward the confirmation execution message to all their neighboring nodes until the confirmation execution message is broadcast to all nodes. Broadcasting the confirmation execution message may also be other broadcasting manners.

In another embodiment of the present application, the determining, by at least one node in the multiple nodes, an operation state of the block includes: when a node in the at least one node satisfies a first preset condition, determining, by the node, the block as an irreversible block, and determining a height of a highest irreversible block as an irreversible block height.

It should be noted that each node may determine the block as the irreversible block, as long as the node satisfies the first preset condition. The number of nodes that may determine the irreversible block is not specifically limited in the embodiments of the present application. At this time, in order to save a storage space, the at least one verification data corresponding to the at least one data change log in the block may also be discarded, i.e., the data change operation in the block no longer requires the verification data to prove the legitimacy of the data change operation. However, whether the verification data is discarded or not is not limited in the embodiments of the present application, and when the node has determined the block as the irreversible block, the verification data in the block may not be discarded.

In an embodiment of the present application, when the node has determined the block as the irreversible block, it means that a data state after executing the write operation may be queried from any one synchronous node (unless the data state is changed by the subsequent operation).

In an embodiment of the present application, even if the block has not become the irreversible block, as long as the block is executed by a synchronous node, an execution result of the data change operation recorded in the block may be queried from the synchronous node.

In another embodiment of the present application, the first preset condition includes: receiving, by the node in the at least one node, the confirmation execution message broadcast by all synchronous nodes in the multiple nodes; and determining, by the node in the at least one node, all blocks generated before the block as the irreversible block.

It should be understood that the first preset condition includes two conditions. A first condition is that the node has received the confirmation execution message broadcast separately to itself by all the synchronous nodes, which indicates that all the synchronous nodes have executed all the data change operations recorded in the block. A second condition is that all blocks generated before the block are determined as the irreversible block by the node, which indicates that each synchronous node has completed the data synchronization for all blocks received before, and each data state after executing each write operation of the irreversible block may be queried from each synchronous node (unless the data state is changed by the subsequent operation). Only when the two conditions are satisfied may the node determine the block as the irreversible block.

In another embodiment of the present application, the method further includes: sending, by the master node, a height of a block containing the at least one data change log corresponding to the write operation to the application program, so that the application program determines the state of the data synchronization according to the height of the block containing the at least one data change log corresponding to the write operation and the operation state of the block.

It should be understood that when the application program submits the write operation to the master node, the master node accordingly informs the application program of the height of the block containing the at least one data change log corresponding to the write operation, i.e., when the data synchronization is performed in units of blocks, the master node may place the write operation on the block with a preset height and send the preset height to the application program, so as to inform the application program of the height of the block containing the at least one data change log corresponding to the write operation. Then the application program determines the state of the data synchronization according to the height of the block containing the at least one data change log corresponding to the write operation.

In another embodiment of the present application, when the at least one node in the multiple nodes satisfies both the first preset condition and the second preset condition, the node may determine the block as the irreversible block, and determine the height of the highest irreversible block as the irreversible block height, and the node may also determine the block as the confirmed block, and determine the height of the highest confirmed block as the confirmed block height.

In another embodiment of the present application, the method further includes: in the case that the at least one master node includes one master node, when there is the at least one data change log at a certain time interval or the data change log reaches a certain number, generating, by the master node, the block; or in the case that the at least one master node includes multiple master nodes, generating, by the multiple master nodes, the block in turn.

It should be understood that when the number of at least one master node is only one, when the master node has the at least one data change log in a certain time interval or the data change log of the master node reaches a certain number, the master node generates the block. It should be noted that, at this time, the master node generates blocks continuously, as long as there is the at least one data change log at a certain time interval or the data change log reaches a certain number, the master node generates a new block, and so on, to achieve outputting the blocks continuously. It should be noted that the embodiments of the present application do not limit how many data change logs exist at a certain time interval before the master node generates a new block.

In an embodiment of the present application, when the number of at least one master node is multiple, it is necessary to judge which master node has the right to output the block, but the specific strategy for judging which master node has the right to output the block is not limited in the embodiments of the present application. The multiple master nodes may generate the block in turn, or the master node that outputs the block at this time may be selected by voting, or the master node that outputs the block at this time may be selected by other ways. No matter which kind of strategies is adopted to select the master node that outputs the block, the master node that has the right to output the block may output the block if the master node has the data change log that has not yet been packaged into the block, and if the master node that turns to output the block does not have the data change log that has not yet been packaged, the master node does not output the block or output an empty block.

In another embodiment of the present application, the executing at least one data change operation corresponding to the at least one data change log in the block includes: executing a data change operation in each block according to an order of blocks; executing a data change operation in each block according to an order of data change logs in the block; or executing multiple unrelated data change operations concurrently.

It should be noted that the order in which the synchronous node executes the data change operation in each block is not limited in the embodiments of the present application. The synchronous node may sequentially execute the data change operation in each block according to the order of the blocks broadcast by the master node. The synchronous node may also sequentially execute the data change operation in each block according to the order of the data change logs packaged into each block by the master node. The multiple unrelated data change operation in each block or multiple blocks may also be executed concurrently.

In an embodiment of the present application, regardless of the number of at least one master node, the blocks are generated continuously. Therefore, the generation time of each block is different, and the time for broadcasting each block to the synchronous node by the master node that generates the block is also different. Some blocks are broadcast to the synchronous node first, and some blocks are broadcast to the synchronous node later, so the order of the blocks refers to the order in which the master node that generates the block broadcasts the blocks. The master node that generates the block packages the data change log into the block after generating the block, and the time for packaging each data change log by the master node that generates the block is different. Some data change logs are packaged into the block first, and some data change logs are packaged into the block later, so the order of the data change logs in each block refers to the order in which the master node that generates the block packages the data change logs into the block.

In an embodiment of the present application, the unrelated data change operations mean that when the unrelated data change operations are executed at the same time, there is no impact on the data state after execution, for example, change operations to different data may be executed concurrently. The unrelated data change operations may be existed in a same block, and the unrelated data change operations may be existed in different blocks. When there are unrelated data change operations, the embodiments of the present application do not limit that the synchronous node must execute corresponding data change operations according to the order of the blocks or the order of the data change logs mentioned above. The synchronous node may also execute the unrelated data change operations in different blocks or in a same block concurrently.

In another embodiment of the present application, the method further includes: broadcasting, by the master node, at least one verification data corresponding to the at least one data change log in the block while broadcasting the block.

Specifically, while the master node that generates the block broadcasts the block, the master node that generates the block may also broadcast the verification data corresponding to the data change operation to other synchronous nodes.

It should be noted that the number of verification data in the block is not limited in the embodiments of the present application. One verification data may correspond to one data change log, one verification data may also correspond to multiple data change logs, or there may also be a data change log without corresponding verification data.

In an embodiment of the present application, the verification data is authorized by an owner who has the right to execute the data change operation, and the data change operation with the verification data authorized by the owner is trustworthy and cannot be tampered with. Since all the data change operations have the verification data to prove their legitimacy, if a node maliciously performs a data change operation which having no verification data without authorization, permanent evidence is left, which may be used for security audits, and the node may even be eliminated from the entire network on the spot. In particular, since the data change operation is accompanied by the verification data, which proves that the data change operation is authorized by the owner of the related data (such as transferring to others). The related nodes cannot tamper with the data without authorization (otherwise, most nodes refuse to execute), or even cannot discard the data change operation without authorization (otherwise, the application program submitting the data change operation cannot find corresponding operation on the blockchain, and can use a signature receipt of the verification data received by the node as an evidence to automatically report the node for evil).

In another embodiment of the present application, the reading, by at least one synchronous node in the multiple nodes, the at least one data change log in the block, and executing at least one data change operation corresponding to the at least one data change log in the block includes: verifying, by the at least one synchronous node, the at least one verification data; and when the at least one verification data is verified, reading, by the at least one synchronous node, the at least one data change log in the block, and executing the at least one data change operation corresponding to the at least one data change log in the block.

Specifically, after receiving the block broadcast by the master node that generates the block and the at least one verification data corresponding to the at least one data change log, the synchronous node may verify the at least one verification data. After verifying the at least one verification data, the synchronous node may read the at least one data change log in the block, and execute the at least one data change operation corresponding to the at least one data change log in the block. When not verifying the at least one verification data, the synchronous node may not execute the at least one data change operation in the block. Since the data change operation is not authorized by an entity that has the right to execute the data change operation, there is the possibility of malicious tampering.

In another embodiment of the present application, the method further includes: verifying whether data of the at least one synchronous node after executing the at least one data change operation in the block is consistent; and when the data of the at least one synchronous node after executing the at least one data change operation in the block is inconsistent, removing nodes with inconsistent data according to a preset strategy.

It should be noted that after executing all the data change operations in the block, each synchronous node has completed the data synchronization of the block, and therefore, in order to ensure the consistency of the data synchronized by each synchronous node, it is better to verify the data after the data synchronization in each synchronous node. The embodiments of the present application do not limit who initiates the operation of verifying the consistency of the data, which may be verified by the computer code or manual verification. The specific verification method may be that all data is saved with the Merkle tree, and the consistency of the data may be judged by comparing the Hash values of root nodes of different nodes after executing the same block, or the specific verification method may be that a numerical digest may be calculated for all data to judge the consistency of the data, or other manners is performed.

In an embodiment of the present application, when the data of the at least one synchronous node after executing the at least one data change operation in the block is inconsistent, the nodes with the inconsistent data are removed according to the preset strategy. It should be noted that the preset strategy may be based on the data synchronized by most synchronous nodes, or adopt Byzantine consensus, or the like, which is not limited in the embodiments of the present application.

It should be noted that the number of nodes with the inconsistent data is not limited in the embodiments of the present application, which may be one or two or more. In an embodiment of the present application, when the number of nodes with the inconsistent data is greater than or equal to a preset number, the system service is suspended and waiting for manual processing. The embodiments of the present application do not limit how many nodes with the inconsistent data are reached, the system service is suspended, which may be two-thirds or three-quarters. The embodiments of the present application do not limit who initiates the operation of removing the nodes with the inconsistent data, which may be the computer code or manual work.

In an embodiment of the present application, when the number of at least one master node is one, i.e., there is only one master node and at least one slave node in the multiple nodes, if the node with the inconsistent data includes the master node, a node may be elected as a new master node from all the slave nodes and/or added new nodes according to a second preset strategy, and the new master node continues to perform all functions of the master node to complete the data synchronization. When the number of at least one master node is multiple, i.e., there are multiple master nodes and/or at least one slave node in the multiple nodes, if the node with the inconsistent data includes at least one master node in the multiple master nodes, a node may be elected as a new master node from all slave nodes and/or added new nodes according to a second preset strategy, or a new master node may not be elected. However, whether or not the master node is removed due to the inconsistent data, a new master node may be elected, and the embodiments of the present application do not limit the timing of electing the new master node.

It should also be noted that the embodiments of the present application do not limit the specific implementation form of the second preset strategy. A node with a highest number of votes may be elected as the new master node, a preset candidate node may also be used as the new master node, or the new master node may also be randomly selected. The embodiments of the present application do not limit who initiates the second preset strategy to select the new master node, which may be the computer code or manual work.

In another embodiment of the present application, the method further includes: when a new node is added, reading, by the new node, all data change logs in all blocks sequentially, and executing data change operations corresponding to all data change logs.

Specifically, when the new node is added to the blockchain, the new node may read all the data change logs in all the blocks generated by the at least one master node, and execute all the data change operations corresponding to all the data change logs in all the blocks, so as to complete the data synchronization.

In an embodiment of the present application, the new node may execute sequentially the data change operation in each block according to the order of the blocks. The new node may also execute sequentially the data change operation in each block according to the order of the data change logs packaged into each block by the master node. The new node may also execute multiple unrelated data change operations in each block or multiple blocks concurrently.

In another embodiment of the present application, a new generated block includes a digital digest of a previous block.

It should be understood that if the blocks generated by the master node in chronological order are a first block, a second block, and a third block, respectively. The second block includes the digital digest in the first block, and the third block includes the digital digest in the second block, but the third block does not directly include the digital digest in the first block.

In an embodiment of the present application, the digital digest is to convert an arbitrary length message into a fixed length short message. The digital digest is similar to a function of an independent variable type message (i.e., a Hash function). The digital digest adopts a one-way Hash function to convert (i.e., "digest") a plaintext that needs to be encrypted into a fixed length (for example, 128-bit) ciphertext. This string of the ciphertext is also called a digital fingerprint. The ciphertext has a fixed length. Results of converting (i.e., "digesting") different plaintexts into ciphertexts are always different, but digests adopted by a same plaintext must be consistent.

In another embodiment of the present application, the method further includes: forking a blockchain where the multiple nodes are located into at least two sub-chains, so that the master node packages a data change log corresponding to the write operation into a block of a corresponding sub-chain by category.

It should be understood that when the number of data change logs is large, the blockchain may be forked to generate at least two sub-chains. In other words, after the block with the specific height of N is generated, there are at least two (N+1)th blocks. A previous block of each (N+1)th block is a same block (i.e., the block with the height of N). The master node may package a newly generated data change log into the (N+1)th blocks in different sub-chains by the category, and each sub-chain includes all the blocks generated before forking the blockchain, so that the storage space occupied by each sub-chain is not be too large. Therefore, when a new node is added, the time taken by the new node to execute all the blocks before and after forking the blockchain may be maintained within an acceptable range.

In an embodiment, packaging the newly generated data change log into different blocks by the category means that the newly generated data change log may be packaged into different blocks respectively according to users. I.e., data of different users are not related to each other, the data change logs of a certain group of users are packaged into a sub-chain according to a user number, and the data change logs of another group of users are packaged into another sub-chain.

In an embodiment, each of the at least two sub-chains may also continue to fork according to requirements, and so on, the blockchain is forked continuously, and the sub-chains obtained by each forking includes all the blocks generated before forking.

However, it should be noted that the embodiments of the present application do not limit how many sub-chains the blockchain is forked into, which may be set by those skilled in the art according to the actual need.

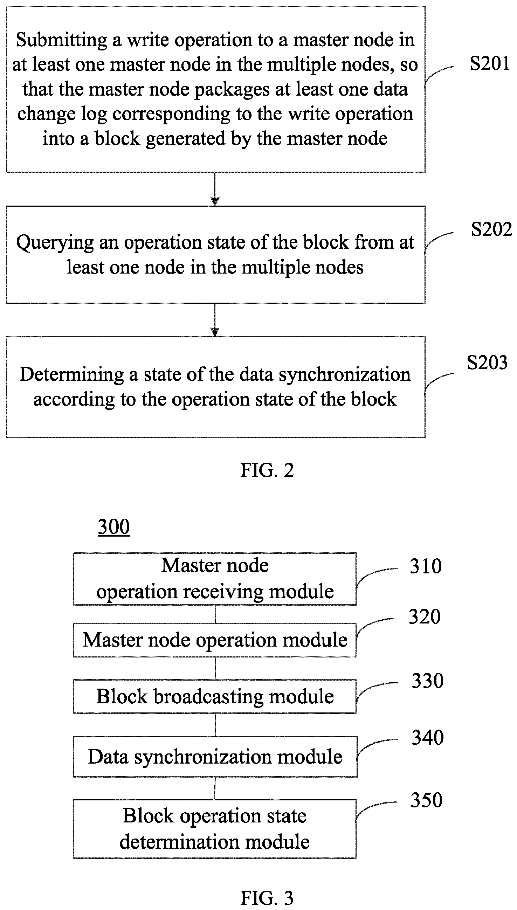

FIG. 2 is a schematic flowchart of a method for data synchronization of multiple nodes according to another embodiment of the present application. The method described in FIG. 2 is executed by an application program on a user device, which is not limited in the embodiments of the present application. As shown in FIG. 2, the method includes the following contents.

S201: submitting a write operation to a master node in at least one master node in the multiple nodes, so that the master node packages at least one data change log corresponding to the write operation into a block generated by the master node.

S202: querying an operation state of the block from at least one node in the multiple nodes.

S203: determining a state of the data synchronization according to the operation state of the block.

It should be understood that the data synchronization may be performed in units of blocks, and the application program may determine the state of the data synchronization according to the operation state of the block (i.e., a reception state of the block and/or an execution state of the block). I.e., in a data synchronization process, the application program balances a contradiction between the data reliability and the synchronization performance of the write operation, and when the data synchronization progress of each node is different, the synchronization progress of each node may be generally known.

Specifically, after at least one node in the multiple nodes determines the operation state of the block, the application program may query the operation state of the block from the at least one node in the multiple nodes, and after the application program queries the operation state of the block, the application program may determine the state of the data synchronization during the data synchronization process according to the operation state of the block.

In an embodiment of the present application, the application program may determine the state of the data synchronization according to the reception state of the block. For example, since multiple write operations may be included in the data synchronization process, the multiple write operations of the application program only need to wait for all the multiple write operations to be confirmed after executing a final write operation (for example, the block containing the at least one data change log corresponding to the write operation becomes an confirmed block), instead of waiting for each write operation to be confirmed before performing a next operation. When the application program finds that there is a fault in a write operation process, an uncompleted write operation may be restarted, which may balance the contradiction between the data reliability and the synchronization performance of the write operation. The application program may also determine the state of data synchronization based on the execution state of the block. For example, the application program may clearly understand the state of the data synchronization between the nodes through the execution state of the block, so as to know which node may query the data changed by the write operation, thereby solving the problems that the data synchronized by which node prevails when the data synchronization progress of each node is different.

Therefore, no matter the data synchronization is performed under any kind of network, it is obvious to know that the data synchronized by which node shall prevail when the data synchronization progress of each node is different, and the contradiction existing in the database cluster between the data reliability and the synchronization performance of the write operation may be balanced.

However, it should be noted that, of course, the application program may also independently choose other solutions according to its own needs, as long as the other solutions may balance the contradiction existing in the database cluster between the data reliability and the synchronization performance of the write operation, or may know that the data synchronized by which node shall prevail when the data synchronization progress of each node is different.

In another embodiment of the present application, the method further includes: receiving a height of a block containing the at least one data change log corresponding to the write operation from the master node.

In another embodiment of the present application, the determining a state of the data synchronization according to the operation state of the block includes: comparing a confirmed block height with the height of the block containing the at least one data change log corresponding to the write operation; and when the height of the block containing the at least one data change log corresponding to the write operation is less than or equal to the confirmed block height, determining that the write operation is successfully written.

It should be understood that when the height of the block containing the at least one data change log corresponding to the write operation is less than or equal to the confirmed block height, it indicates that the write operation is successfully written. Since a synchronization height (i.e., the confirmed block height) of the current block is opened to the application program in the present application, and the application program may compare the confirmed block height with the height of the block containing the at least one data change log corresponding to the write operation, multiple write operations only need to wait once to judge whether the write operation is successful written, instead of each write operation waiting for the data synchronization to be completed before judging whether the write operation is successful written, thereby balancing the contradiction existing in the database cluster between the data reliability and the synchronization performance of the write operation.

However, it should be noted that the application program may also write a batch of data first, and then wait for the related block to become the confirmed block, and thus, the write operation may be considered to be successfully written (in fact, it only necessary to judge that the block with the highest height in multiple blocks including the write operation is the confirmed block, and thus, the write operation may be considered to be successfully written), which has a small impact on the synchronization performance of the write operation.

In another embodiment of the present application, the determining a state of the data synchronization according to the operation state of the block includes: comparing an irreversible block height with the height of the block containing the at least one data change log corresponding to the write operation; and when the height of the block containing the at least one data change log corresponding to the write operation is less than or equal to the irreversible block height, being able to query a data state after executing the write operation from at least one synchronous node in the multiple nodes.

It should be understood that when the height of the block containing the at least one data change log corresponding to the write operation is less than or equal to the irreversible block height, it indicates that the data state after executing the write operation may be able to query from the at least one synchronous node. Since the synchronization height (i.e., the irreversible block height) of the current block may be opened to the application program in the technical solutions of the present application, the application program may compare the irreversible block height with the height of the block containing the at least one data change log corresponding to the write operation. The application program may clearly understand the state of the data synchronization between the nodes through the execution state of the data change operation in each block, so as to solve the problems that the data synchronized by which node shall prevail when the data synchronization progress of each node is different.

It should be noted that the embodiments of the present application do not limit the problems that the data synchronized by which node shall prevail when the data synchronization progress of each node is different. Generally speaking, the data synchronized by a node with a highest execution height prevails (i.e., the data change operations recorded in all the blocks whose height are less than or equal to the execution height of the execution node are performed by the node), because the data of the node is up-to-date. However, the data synchronized by any node with the execution height that exceeds the height of the block for which the concerned write operation is performed may also prevail. The data synchronized by other nodes may also prevail.

In another embodiment of the present application, the determining a state of the data synchronization according to the operation state of the block includes: comparing the height of the block containing the at least one data change log corresponding to the write operation with the irreversible block height and the confirmed block height; and when the height of the block containing the at least one data change log corresponding to the write operation is less than or equal to the irreversible block height and the confirmed block height, being able to query a data state after executing the write operation from the at least one synchronous node, and determining that the write operation is successfully written.

In summary, no matter the data synchronization is performed under any kind of network, it is obvious to know that the data synchronized by which node shall prevail when the data synchronization progress of each node is different, and the contradiction existing in the database cluster between the data reliability and the synchronization performance of the write operation may be balanced.

FIG. 3 is a block diagram of an apparatus for data synchronization of multiple nodes according to an embodiment of the present application. As shown in FIG. 3, the apparatus 300 includes:

a master node operation receiving module 310, configured to receive, by a master node in at least one master node in the multiple nodes, a write operation submitted by an application program;

a master node operation module 320, configured to package, by the master node, at least one data change log corresponding to the write operation into a block generated by the master node, and sign the block;

a block broadcasting module 330, configured to broadcast, by the master node, the block to other nodes in the multiple nodes after signing the block;

a data synchronization module 340, configured to read, by at least one synchronous node in the multiple nodes, the at least one data change log in the block, and execute at least one data change operation corresponding to the at least one data change log in the block, so as to complete the data synchronization; and

a block operation state determination module 350, configured to determine, by at least one node in the multiple nodes, an operation state of the block, so that the application program determines a state of the data synchronization according to the operation state of the block.

The implementation process of the effect and functions of each module in the above apparatus is described in detail in the implementation process of the corresponding steps in the above methods, which will not be repeated herein again.

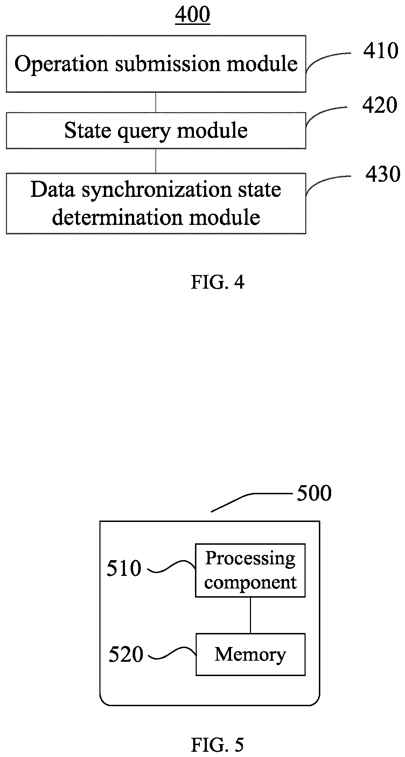

FIG. 4 is a block diagram of an apparatus for data synchronization of multiple nodes according to another embodiment of the present application. As shown in FIG. 4, the apparatus 400 includes:

an operation submission module 410, configured to submit a write operation to a master node in at least one master node in the multiple nodes, so that the master node packages at least one data change log corresponding to the write operation into a block generated by the master node;

a state query module 420, configured to query an operation state of the block from at least one node in the multiple nodes; and

a data synchronization state determination module 430, configured to determine a state of data synchronization according to the operation state of the block.

The implementation process of the effect and functions of each module in the above apparatus is described in detail in the implementation process of the corresponding steps in the above methods, which will not be repeated herein again.

FIG. 5 is a block diagram of an apparatus 500 for data synchronization of multiple nodes according to another embodiment of the present application.

Referring to FIG. 5, the apparatus 500 includes a processing component 510 that further includes one or more processors, and a memory resource represented by a memory 520 for storing an instruction executable by the processing component 510, such as an application program. The application program stored in the memory 520 may include one or more modules, and each module corresponds to a set of instructions. Further, the processing component 510 is configured to execute the instructions, so as to perform the method for data synchronization of multiple nodes according to any of the above embodiments.

The apparatus 500 may also include a power supply module configured to perform power management of the apparatus 500, wired or wireless network interface(s) configured to connect the apparatus 500 to a network, and an input/output (I/O) interface. The apparatus 500 may operate based on an operating system stored in the memory 520, such as Windows ServerTM, Mac OS XTM, UnixTM, LinuxTM, FreeBSDTM, or the like.

The present application also provides a non-temporary computer readable storage medium, when instructions in the storage medium are executed by the processor of the above apparatus 500, the above apparatus 500 performs a method for data synchronization of multiple nodes according to any of the above embodiments. The computer storage medium may be any tangible medium, such as a floppy disk, a CD-ROM, a DVD, a hard drive, even a network medium, and the like.

The above are only the preferred embodiments of the present application and are not used to limit the scope of the present application. Any modifications, equivalent substitutions, improvements and so on made within the spirit and principle of the present application should be included within the scope of the present application.

## Claims

1. A method for data synchronization of multiple nodes, comprising:
receiving, by a master node in at least one master node in the multiple nodes, a write operation submitted by an application program;
packaging, by the master node, at least one data change log corresponding to the write operation into a block generated by the master node, and signing the block;
broadcasting, by the master node, the block to other nodes in the multiple nodes after signing the block;
reading, by at least one synchronous node in the multiple nodes, the at least one data change log in the block, and executing at least one data change operation corresponding to the at least one data change log in the block, so as to complete the data synchronization; and
determining, by at least one node in the multiple nodes, an operation state of the block, so that the application program determines a state of the data synchronization according to the operation state of the block.

2. The method according to claim 1, further comprising:
broadcasting, by each node of the multiple nodes except the master node, a confirmation reception message to other nodes in the multiple nodes after receiving the block,
wherein the confirmation reception message comprises a confirmation reception signature of the node in the multiple nodes except the master node.

3. The method according to claim 2, wherein the determining, by at least one node in the multiple nodes, an operation state of the block comprises:
when a node in the at least one node satisfies a second preset condition, determining, by the node, the block as a confirmed block, and determining a height of a highest confirmed block as a confirmed block height.

4. The method according to claim 3, wherein the second preset condition comprises:
receiving, by the node in the at least one node, the confirmation reception message broadcast by a preset number of nodes in the multiple nodes except the master node; and
determining, by the node in the at least one node, all blocks generated before the block as the confirmed block.

5. The method of claim 1, further comprising:
broadcasting, by a synchronous node in the at least one synchronous node, a confirmation execution message to other nodes in the multiple nodes after executing the at least one data change operation in the block,
wherein the confirmation execution message comprises a confirmation execution signature of the synchronous node.

6. The method according to claim 5, wherein the determining, by at least one node in the multiple nodes, an operation state of the block comprises:
when a node in the at least one node satisfies a first preset condition, determining, by the node, the block as an irreversible block and determining a height of a highest irreversible block as an irreversible block height.

7. The method according to claim 6, wherein the first preset condition comprises:
receiving, by the node in the at least one node, the confirmation execution message broadcast by all synchronous nodes in the multiple nodes; and
determining, by the node in the at least one node, all blocks generated before the block as the irreversible block.

8. The method according to any one of claims 1 to 7, further comprising:
sending, by the master node, a height of a block containing the at least one data change log corresponding to the write operation to the application program, so that the application program determines the state of the data synchronization according to the height of the block containing the at least one data change log corresponding to the write operation and the operation state of the block.

9. The method according to any one of claims 1 to 7, further comprising:
broadcasting, by the master node, at least one verification data corresponding to the at least one data change log in the block while broadcasting the block,
wherein the reading, by at least one synchronous node in the multiple nodes, the at least one data change log in the block, and executing at least one data change operation corresponding to the at least one data change log in the block comprises:
verifying, by the at least one synchronous node, the at least one verification data; and
when the at least one verification data is verified, reading, by the at least one synchronous node, the at least one data change log in the block, and executing the at least one data change operation corresponding to the at least one data change log in the block.

10. The method according to any one of claims 1 to 7, further comprising:
verifying whether data of the at least one synchronous node after executing the at least one data change operation in the block is consistent; and
when the data of the at least one synchronous node after executing the at least one data change operation in the block is inconsistent, removing nodes with inconsistent data according to a preset strategy.

11. The method according to any one of claims 1 to 7, further comprising:
forking a blockchain where the multiple nodes are located into at least two sub-chains, so that the master node packages a data change log corresponding to the write operation into a block of a corresponding sub-chain by category.

12. A method for data synchronization of multiple nodes, comprising:
submitting a write operation to a master node in at least one master node in the multiple nodes, so that the master node packages at least one data change log corresponding to the write operation into a block generated by the master node;
querying an operation state of the block from at least one node in the multiple nodes; and
determining a state of the data synchronization according to the operation state of the block.

13. The method according to claim 12, further comprising:
receiving a height of a block containing the at least one data change log corresponding to the write operation from the master node,
wherein the determining a state of the data synchronization according to the operation state of the block comprises:
comparing a confirmed block height with the height of the block containing the at least one data change log corresponding to the write operation; and
when the height of the block containing the at least one data change log corresponding to the write operation is less than or equal to the confirmed block height, determining that the write operation is successfully written, and/or
comparing an irreversible block height with the height of the block containing the at least one data change log corresponding to the write operation; and
when the height of the block containing the at least one data change log corresponding to the write operation is less than or equal to the irreversible block height, being able to query a data state after executing the write operation from at least one synchronous node in the multiple nodes.

14. An apparatus (300) for data synchronization of multiple nodes, comprising:
a master node operation receiving module (310), configured to receive, by a master node in at least one master node in the multiple nodes, a write operation submitted by an application program;
a master node operation module (320), configured to package, by the master node, at least one data change log corresponding to the write operation into a block generated by the master node, and sign the block;
a block broadcasting module (330), configured to broadcast, by the master node, the block to other nodes in the multiple nodes after signing the block;
a data synchronization module (340), configured to read, by at least one synchronous node in the multiple nodes, the at least one data change log in the block, and execute at least one data change operation corresponding to the at least one data change log in the block, so as to complete the data synchronization; and
a block operation state determination module (350), configured to determine, by at least one node in the multiple nodes, an operation state of the block, so that the application program determines a state of the data synchronization according to the operation state of the block.

15. An apparatus (400) for data synchronization of multiple nodes, comprising:
an operation submission module (410), configured to submit a write operation to a master node in at least one master node in the multiple nodes, so that the master node packages at least one data change log corresponding to the write operation into a block generated by the master node;
a state query module (420), configured to query an operation state of the block from at least one node in the multiple nodes; and
a data synchronization state determination module (430), configured to determine a state of the data synchronization according to the operation state of the block.

16. A computer device, comprising:
a memory, a processor and a computer program stored on the memory and executed by the processor,
wherein the processor performs a method for data synchronization of multiple nodes according to any one of claims 1 to 13 when executing the computer program.
